# DEMANDE DE BREVET EUROPEEN

(11) **EP 1 051 009 A1**
(43) Date de publication de la demande: **08.11.2000**
(21) Numéro de dépôt: 00401161.5
(22) Date de dépôt: 27.04.2000
(51) Int. Cl.: H04L 29/06, G06F 1/00

(54) **Serveur virtuel fournissant des services de sécurité**

(30) Priorité: 06.05.1999 FR 9905763
(71) Demandeur: ALCATEL, 75008 Paris (FR)
(72) Inventeur: Marquet, Bertrand, 92160 Antony (FR); Fouquet, Guy, 91620 Nozay (FR); Ballester, Laurent, 78700 Conflans Sainte Honorine (FR)
(74) Mandataire: Lamoureux, Bernard

(57) **Abrégé**

Serveur virtuel de sécurité permettant à un ensemble d'applications d'accéder à un ensemble de services de sécurité, caractérisé en ce qu'il possède :
- des moyens pour recevoir de la part des applications logicielles des requêtes de services,
- des moyens de communication avec des serveurs de sécurité mettant en oeuvre ces services de sécurité,
- des moyens pour choisir au moins un serveur de sécurité destinataire pour chaque requête de service reçue et pour lui transmettre des informations lui permettant de fournir le service de sécurité correspondant à la requête de service.

## Description

La présente invention est relative à un système informatique nécessitant la sécurisation des communications entre certains des composants logiciels le composant.

L'invention s'applique particulièrement bien aux systèmes de gestion de réseau, notamment de réseau de télécommunication. Cet exemple d'application sera plus particulièrement développé par la suite, mais l'invention est toutefois susceptible de s'appliquer à d'autres types d'applications, par exemple aux applications pour le commerce électronique.

De façon classique, les systèmes de gestion de réseaux de télécommunication comportent un ensemble d'applications logicielles de gestion. Ces applications peuvent être réparties au sein d'un système distribué, et peuvent avoir besoin de communiquer entre elles afin d'échanger des informations.

Un besoin peut exister de sécuriser ces communications. En fonction de la menace que l'on craint ainsi que du niveau de sensibilité des informations transmises, différents services de sécurisation peuvent être mis en oeuvre, comme par exemple :
- Identification et authentification : par cette technique, le destinataire d'un message est assuré de l'origine de ce message. On a ainsi la garantie qu'il n'existe pas de messages émis par un tiers malveillant dans le système.
- Contrôle d'accès : une application ne réagira aux commandes contenues dans les messages, qu'en fonction de règles définies dans une politique de sécurité. Par exemple, une application peut ne communiquer qu'avec un ensemble déterminé de correspondants.
- Non-répudiation : un certain nombre d'informations sur les messages échangés sont mémorisées afin qu'aucune des parties prenantes ne puisse renier le fait d'avoir participer à la communication.
- Confidentialité : les messages sont chiffrés de sorte qu'un tiers ne puisse être en mesure d'en interpréter le contenu.

Typiquement, ces services, ainsi que d'autres non mentionnés, sont mis en oeuvre par des applications logicielles spécifiques que l'on appelle serveurs de sécurité. Plusieurs serveurs de sécurité peuvent exister, chacun fournissant un ou plusieurs des services de sécurisation. De même chaque service de sécurisation peut être fourni à différents niveaux de qualité.

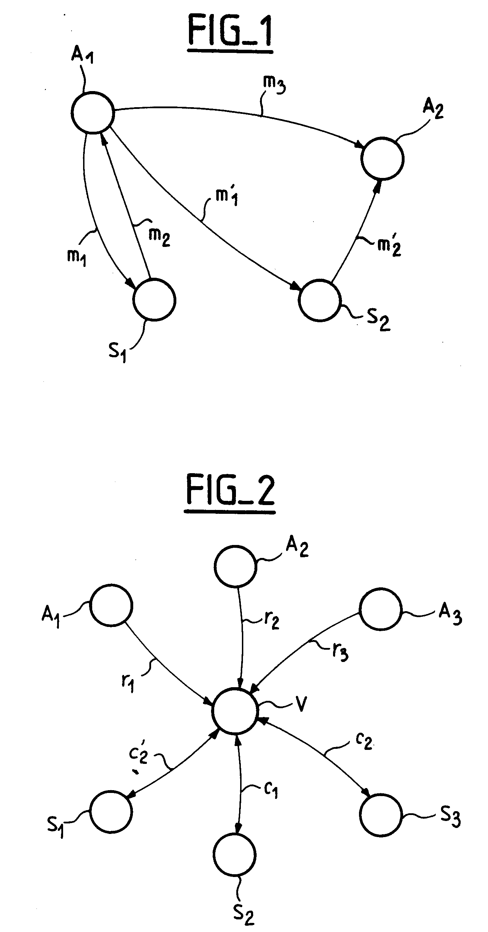

La figure 1 présente une architecture conforme à l'état de la technique dans ce domaine. L'application A₁ souhaite sécuriser une communication avec l'application A₂. Pour cela, elle peut utiliser le serveur de sécurité S₁ qui fournit un support bas-niveau de cryptographie, ou bien le serveur de sécurité S₂ qui fournit un service de cryptographie de haut-niveau.

Dans le cas où l'application A₁ utilise le serveur S₁, elle envoie dans un premier temps un message m₁ de requête de service au serveur S₁. Ce serveur S₁ retourne une clé dans un message de réponse m₂. Ensuite, l'application A₁ peut envoyer son message m₃ à destination de l'application A₂ après l'avoir chiffré avec la clé.

Dans le cas où l'application A₁ fait appel au serveur de sécurité S₂, elle confie son message à transmettre m'₁ au serveur de sécurité S₂. Ce serveur S₂ se charge alors de mettre en oeuvre les techniques de cryptographie puis transmet le message crypté m'₂ à l'application destinatrice A₂.

Ces deux exemples triviaux permettent de mettre en exergue le fait que pour un même service de sécurisation, différents niveaux de services peuvent être disponibles. De la même façon pour un même service et un même niveau de service, il peut exister différents protocoles de négociation entre l'application initiatrice (A₁) et le serveur de sécurité. C'est par exemple le cas pour la négociation de la clé de chiffrement dans le cas d'un service de cryptographie. On peut citer, à titre d'exemples de tels protocoles, les méthodes de Diffie-Hellman ou de Needham-Schrôder. Ces méthodes sont par exemples présentées dans l'ouvrage intitulé "*Practical Intranet Security"* de Paul Ashley et Mark Vandenwauver, publié aux éditions Kluwer Academic Publishers en 1999.

Pour résumer, une application désirant sécuriser une communication avec une autre application, devra être capable de mettre en oeuvre différents protocoles de négociation en fonction du service et du niveau de service qu'elle désire.

Cela implique aussi que si l'on désire remplacer un serveur de sécurité correspondant à un service et un niveau de service donné, par un autre présentant par exemple une meilleure qualité de service mais mettant en oeuvre un protocole de négociation différent, les applications devront être modifiées si elles n'étaient pas prévues dès le départ pour ce nouveau protocole.

De plus, les moyens de communication à utiliser pour atteindre chacun des serveurs de sécurité peuvent être différents. Par exemple, chacune des applications doit donc pouvoir gérer un accès direct, ou à travers un bus logiciel comme CORBA (*Common Object Request Broker Architecture)* de l'OMG (*Open Management Group)* ou DCOM *(Distributed Common Object Management)* de la société Microsoft, ou encore à travers un réseau.

Le but de la présente invention est, entre autres, de pallier ces différents inconvénients. Pour cela, elle a pour objet un serveur virtuel de sécurité permettant à un ensemble d'applications logicielles d'accéder à un ensemble de services de sécurité. Ce serveur virtuel de sécurité se caractérise en ce qu'il possède :
- des moyens pour recevoir de la part des applications logicielles, des requêtes de services,
- des moyens de communication avec des serveurs de mettant en oeuvre les services de sécurité en question,
- des moyens pour choisir au moins un serveur de sécurité destinataire pour chaque requête de service reçue et pour lui transmettre, via ces moyens de communication, des informations lui permettant de fournir le service de sécurité correspondant à la requête de service, certaines au moins de ces informations étant contenues dans la requête de service.

Selon une mise en oeuvre de l'invention, les applications logicielles peuvent accéder au serveur virtuel de sécurité au travers d'une interface de programmation ou API (pour *Application Programming Interface*, en anglais).

Selon une mise en oeuvre de l'invention, le serveur virtuel de sécurité peut être développé en un langage de programmation tel Java.

L'invention a aussi pour objet le procédé susceptible d'être mis en oeuvre par les applications logicielles pour utiliser ce serveur virtuel de sécurité. Ce procédé se caractérise en ce qu'il comporte les étapes de :
- émission de requêtes de service par une application logicielle à destination d'un serveur virtuel de sécurité,
- choix, par le serveur virtuel de sécurité, d'un serveur de sécurité destinataire, à même de fournir le service de sécurité correspondant à cette requête de service,
- émission d'informations à destination du serveur de sécurité destinataire afin qu'il puisse fournir le service de sécurité, certaines au moins de ces informations étant contenues dans la requête de service.

La figure 1, déjà commentée, représente une architecture conforme à l'état de l'art permettant la sécurisation de communications entre applications.

La figure 2 représente une architecture générale conforme à l'invention.

La figure 2 schématise un exemple d'architecture conforme à l'invention. Les références A₁, A₂ et A₃ représentent trois applications logicielles. Ces applications peuvent émettre trois requêtes de service, r₁, r₂ et r₃ respectivement, au serveur virtuel de sécurité V afin de sécuriser les communications qu'elles désirent initier.

Selon une mise en oeuvre de l'invention, ces requêtes contiennent uniquement le type de services désiré (confidentialité, authentification...).

Le serveur virtuel de sécurité a alors pour tâche de déterminer le ou les serveurs de sécurités parmi l'ensemble disponible S₁, S₂ et S₃, qui permettent de fournir le service demandé. Pour cela, le serveur virtuel V peut posséder un moyen de mémorisation permettant d'associer les services de sécurité demandés par les applications et les serveurs de sécurité fournissant ces services.

Dans l'exemple de la figure 1, la requête de service r₁ engendre une requête c₁ entre le serveur virtuel V et le serveur de sécurité S₂. Cette requête peut être composée d'un échange de messages entre les deux participants. Cet échange dépend du serveur de sécurité S₂ et du protocole de négociation qu'il met en oeuvre. On voit que cette architecture masque le protocole de négociation en question pour l'application qui n'a donc pas besoin de s'en préoccuper.

Par ailleurs l'application A₂ émet au serveur virtuel de sécurité V une requête de service r₂. Cette requête va être interprétée par le serveur virtuel de la même façon que précédemment, mais ici la réalisation du service demandé nécessite deux serveurs de sécurité, S₁ et S₃, avec lesquels le serveur virtuel initie deux requêtes c₂ et c'₂.

Selon l'architecture conforme à l'invention, les applications (A₁, A₂ et A₃) peuvent n'avoir aucune information sur les différents serveurs de sécurités (S₁, S₂, S₃). Comme évoqué précédemment, cela simplifie les communications entre les applications puisque celles-ci sont déchargées de la gestion des différents protocoles de négociation, ainsi que du choix du ou des serveurs de sécurité appropriés au service requis. Il résulte de cela une simplification du développement des applications, et donc une réduction du coût associé.

Par ailleurs, il est courant d'ajouter un serveur de sécurité au sein d'un système de gestion de réseaux, ou d'en remplacer un par un autre. Dans une architecture selon l'état de l'art, cet ajout ou ce remplacement peut résulter sur un nouveau protocole à prendre en compte par les applications, ou en tout cas par un nouveau serveur à prendre en compte pour remplir les services de sécurité pouvant être requis. Cela implique donc nécessairement la modification de toutes les applications concernées.

Au contraire, dans une architecture selon l'invention, seul le serveur virtuel doit être adapté. Bien évidemment, le coût engendré par la modification d'un unique composant logiciel bien identifié est bien moindre que celui qui serait nécessaire pour modifier tout un ensemble de composants logiciels hétérogènes.

De plus, l'architecture selon l'invention permet l'utilisation de plusieurs serveurs de sécurité pour réaliser un même service de sécurité. Cette utilisation est totalement transparente pour les applications. Il est ainsi aisément possible de rendre disponibles des services de sécurité de haut niveau, et de tirer profit des capacités des serveurs de sécurité pour rendre un service qu'ils ne peuvent pas offrir individuellement.

Par ailleurs, c'est au serveur virtuel que revient la charge de gérer la localisation physique des différents serveurs de sécurité ainsi que le moyen d'accès correspondant : accès direct ou par un bus logiciel par exemple.

Enfin, les applications peuvent n'avoir aucune information sur les serveurs de sécurité autres que le serveur virtuel V. Par conséquent, elles peuvent n'avoir aucune information sur les protocoles de négociation mis en oeuvre, et les attaques malveillantes du système n'en seront que plus difficiles.

Selon une mise en oeuvre de l'invention, les applications logicielles peuvent accéder aux fonctions du serveur virtuel au travers d'une interface de programmation ou API (Application Programming Interface).

Selon une mise en oeuvre particulière de l'invention, le serveur virtuel de sécurité est développé en un langage de programmation tel que Java, afin de le rendre indépendant du système d'exploitation sous-jacent. En effet, ainsi développé, le serveur virtuel de sécurité devient à même de fonctionner sur n'importe quel type de système d'exploitation à condition qu'une machine virtuelle Java soit insérée entre ce système d'exploitation et ce serveur.

## Revendications

1. Serveur virtuel de sécurité permettant à un ensemble d'applications logicielles (A₁, A₂, A₃) d'accéder à un ensemble de services de sécurité, caractérisé en ce qu'il possède :
• des moyens pour recevoir de la part desdites applications logicielles des requêtes de services,
• des moyens de communication avec des serveurs de sécurité (S₁, S₂, S₃) mettant en oeuvre lesdits services de sécurité,
• des moyens pour choisir au moins un serveur de sécurité destinataire pour chaque requête de service reçue et pour lui transmettre, via lesdits moyens de communication, des informations lui permettant de fournir le service de sécurité correspondant à ladite requête de service, certaines au moins de ces informations étant contenues dans ladite requête de service.

2. Système selon la revendication précédente, dans lequel lesdites applications logicielles peuvent accéder audit serveur virtuel au travers d'une interface de programmation ou API.

3. Système selon l'une des revendications précédentes, dans lequel ledit serveur virtuel de sécurité est développé en un langage de programmation tel Java.

4. Procédé pour permettre à une application logicielle d'accéder à un service de sécurité, caractérisé en ce qu'il comporte des étapes de :
• émission de requêtes de service par ladite application logicielle à destination d'un serveur virtuel de sécurité,
• choix, par ledit serveur virtuel de sécurité, d'un serveur de sécurité destinataire, à même de fournir le service de sécurité correspondant à ladite requête de service,
• émission d'informations à destination dudit serveur de sécurité destinataire afin qu'il puisse fournir ledit service de sécurité, certaines au moins de ces informations étant contenues dans ladite requête de service.
